# EUROPÄISCHE PATENTSCHRIFT

(11) **EP 3 884 358 B1**
(45) Veröffentlichungstag und Bekanntmachung des Hinweises auf die Patenterteilung: **02.10.2024**
(21) Anmeldenummer: 19786289.9
(22) Anmeldetag: 07.10.2019
(51) Int. Cl.: G06F 3/01, B60K 35/00, B61L 25/00, B61L 15/00, B61L 25/02

(54) **VERFAHREN ZUM GRAPHISCHEN DARSTELLEN VON INHALTEN IN EINEM FAHRZEUG UND FAHRZEUG**
METHOD FOR GRAPHICALLY DISPLAYING CONTENTS IN A VEHICLE, AND VEHICLE
PROCÉDÉ DE REPRÉSENTATION GRAPHIQUE DE CONTENUS DANS UN VÉHICULE ET VÉHICULE

(30) Priorität: 21.11.2018 DE 102018219953
(43) Veröffentlichungstag der Anmeldung: 29.09.2021
(73) Patentinhaber: Volkswagen Aktiengesellschaft, 38440 Wolfsburg (DE)
(72) Erfinder: SCHÖNING, Volkmar, 30900 Wedemark (DE); HÜSEMANN, Frank, 38162 Cremlingen (DE)
(86) Internationale Anmeldenummer: PCT/EP2019/076996
(87) Internationale Veröffentlichungsnummer: WO 2020/104093

(56) Entgegenhaltungen:
- DE-A1- 102014 006 728
- JP-A- 2018 076 027

## Beschreibung

Die Erfindung betrifft ein Verfahren zum Darstellen von graphischen Inhalten, insbesondere von Bewegt-Bildern wie in Filmen oder in Computerspielen, in einem Fahrzeug. Ferner betrifft die Erfindung ein zum Durchführen des erfindungsgemäßen Verfahrens ausgestattetes Fahrzeug.

Das Wohlbefinden von Menschen kann sich aufgrund der Fahrt mit einem Fahrzeug, wie einem Personenkraftfahrzeug, einem Bus, einer Bahn oder einem Schiff, verschlechtern, insbesondere kann Übelkeit auftreten. In diesem Zusammenhang spricht man von der sogenannten Reisekrankheit sofern die Übelkeit vor allem auf eine Abweichung zwischen der optischen Wahrnehmung und dem Gleichgewichtssinn der Betroffenen zurückzuführen ist.

Eine solche Abweichung kommt insbesondere dann zum Tragen, wenn der Passagier eines Fahrzeugs während der Fahrt Medien konsumiert, also beispielsweise liest, sich einen Film ansieht oder ein Computerspiel spielt. Dabei ist der Nutzer optisch von den Bewegungen des Fahrzeugs entkoppelt. Gleichzeitig können in Filmen oder Spielen Bewegung des Betrachters vorgetäuscht werden. Aus den vorgenannten Gründen war es vielen Fahrzeugnutzern, insbesondere Passagieren im Fond, bislang zum Teil nicht möglich, Medien und insbesondere graphische Inhalte wie Filme oder Spiele während der Fahrt mit einem Fahrzeug zu genießen.

Aus der DE 10 2014 006728 A1 ist ein Verfahren zum Darstellen von Informationen auf mindestens einer Anzeigeeinheit in einem Fahrzeug bekannt, wobei die dargestellten Informationen anhand einer sensorbasiert erfassten aktuellen Bewegung des Fahrzeugs und/oder des Nutzers verschoben werden. Die JP 2018 076027 A offenbart ein Verfahren zum Berücksichtigen der Bewegung eines Fahrzeugs bei der Darstellung eines Bildes darin.

Der Erfindung liegt daher die Aufgabe zugrunde, es Nutzern (Passagieren) eines Fahrzeugs zu ermöglichen, während der Fahrt Medien, insbesondere graphisch darstellbare Inhalte, zu konsumieren, ohne dabei unter der Reisekrankheit zu leiden, also ohne Beeinträchtigung des Wohlbefindens des Nutzers. Die Aufgabe wird gelöst durch ein Verfahren und ein Kraftfahrzeug gemäß den Hauptansprüchen. Bevorzugte Ausgestaltungen der Erfindung ergeben sich aus den jeweils rückbezogenen Unteransprüchen.

Die erfindungsgemäße Aufgabe wird gelöst durch ein Verfahren zum graphischen Darstellen von Inhalten in einem Kraftfahrzeug. Dabei weist das in dem erfindungsgemäßen Verfahren genutzte Kraftfahrzeug zumindest einen, bevorzugt mehrere, zum Erfassen von Umgebungsdaten eingerichteten ersten Sensor auf. Ferner weist das Kraftfahrzeug zumindest einen, bevorzugt mehrere zum Erfassen von Fahrzeugdaten eingerichteten zweiten Sensor auf. Zudem weist das Kraftfahrzeug ein Kommunikationsmodul zum Empfangen von übermittelten elektromagnetischen Signalen auf. Weiter weist das im erfindungsgemäßen Verfahren genutzte Fahrzeug ein zum Darstellen von graphischen Inhalten eingerichtetes Anzeigesystem auf, welches zumindest einen Bildschirm umfasst. Unter Verwendung dieser Mittel wird, insbesondere unter der Kontrolle einer entsprechend eingerichteten Steuereinheit, die erfindungsgemäße Aufgabe durch das erfindungsgemäße Verfahren wie folgt gelöst.

In einem ersten Schritt des erfindungsgemäßen Verfahrens wird ein anfänglicher Bildausschnitt eines Bildsignals auf einem Bildschirm des Anzeigesystems dargestellt. Der Bildausschnitt bezeichnet dabei einen flächenhaften Ausschnitt aus einem, beziehungsweise jedem, Frame des Bildsignals. Mit anderen Worten wird im erfindungsgemäßen Verfahren nicht die gesamte Ausdehnung eines Bildsignals dargestellt, sondern nur ein Ausschnitt davon. Bevorzugt handelt es sich dabei um einen zentralen Ausschnitt des Bildsignals, der allseitig von einem Rand des Bildsignals umgeben ist. Erfindungsgemäß beträgt die durchschnittliche Fläche des anfänglichen Bildausschnitts von 70% bis 95%, bevorzugt von 80% bis 90% und besonders bevorzugt 95% der Fläche des Bildsignals. Bei dem Bildsignal handelt es sich um zumindest eine Bilddatei, bevorzugt um eine zeitliche Abfolge von Bilddateien, welche beispielsweise auf einer gespeicherten Filmdatei basieren oder während der Ausführung eines Computerprogramms, beispielsweise eines Computerspiels, erzeugt werden.

Erfindungsgemäß beträgt die durchschnittliche Fläche der im anfänglichen Bildausschnitts gezeigten Bilddateien von 70% bis 95%, besonders bevorzugt von 80% bis 90% und besonders bevorzugt 95% der Fläche der zumindest einen Bilddatei des Bildsignals. Bevorzugt weist der anfängliche Bildausschnitt zudem eine kontextabhängige *region of interest,* ROI, des Bildsignals auf. Diese ROI wird bevorzugt anhand von Metadaten ausgewählt, die beispielsweise für eine Filmdatei spezifizieren, wo ein Schwerpunkt der Handlung des Films erfolgt beziehungsweise was im anfänglichen Bildausschnitt gezeigt werden sollte. Ebenfalls bevorzugt wird der Ausschnitt des Bildsignals auf einem Teil des Bildschirms des Anzeigesystems dargestellt.

In einem weiteren Schritt des erfindungsgemäßen Verfahrens erfolgt eine Prognose für eine Änderung eines Bewegungszustands des Kraftfahrzeugs anhand zumindest eines das Fahrzeug und/oder dessen Umgebung beschreibenden Signals. Dieses zumindest eine Signal wurde dabei insbesondere von dem zumindest einen ersten Sensor, dem zumindest einen zweiten Sensor oder dem Kommunikationsmodul empfangen. Bevorzugt wird eine dreidimensionale Trajektorie des Kraftfahrzeugs für eine in der Zukunft liegende Zeitspanne ermittelt. Die Dauer der Zeitspanne kann dabei von den empfangenen Signalen abhängen oder festgelegt sein. Jedem Punkt der Trajektorie sind dabei bevorzugt Geschwindigkeits-, Beschleunigungs- und/oder Kraftvektoren zugeordnet. Beispielsweise kann anhand eines von einem Gaspedal empfangenen Beschleunigungswunsches des Fahrers ermittelt werden, dass eine Beschleunigung des Fahrzeugs zu erwarten ist. Ebenfalls kann beispielsweise anhand eines vor dem Fahrzeug liegenden Streckenabschnitts ermittelt werden, dass eine Kurvenfahrt des Fahrzeugs durch eine Kurve mit festgelegtem Kurvenradius bevorsteht. Eine oder mehrere derartiger Signale können kombiniert werden, um die Prognose einer Bewegungsänderung für das Kraftfahrzeug durchzuführen. Dem Fachmann sind verschiedene Mittel zum Erzeugen einer Bewegungsprognose für ein Kraftfahrzeug aus dem Stand der Technik bekannt.

Bevorzugt wird während der Durchführung des erfindungsgemäßen Verfahrens zumindest ein die Umgebung des Kraftfahrzeugs betreffendes Umgebungssignal von dem ersten Sensor empfangen. Dies können beispielsweise Kamerabilder der Umgebung oder Output-Signale eines LIDAR-Systems sein. Ferner wird zumindest ein das Kraftfahrzeug betreffendes Fahrzeugsignal von dem zweiten Sensor empfangen. Dies kann beispielsweise eine Lageinformation des Fahrzeugs sein, die von einem Kreiselsensor empfangen wurde, oder eine Quer- oder Längsbeschleunigungsinformation, die von einem Beschleunigungssensor, empfangen wurde. Ferner wird zumindest ein das Kraftfahrzeug oder dessen Umgebung betreffendes Kommunikationssignal von dem Kommunikationsmodul empfangen. Somit sind beispielsweise Car2Car- und x2Car-Daten im erfindungsgemäßen Verfahren verwendbar.

Im erfindungsgemäßen Verfahren erfolgt ferner eine Prognose einer Änderung einer Relativposition zwischen einem Nutzer des Fahrzeugs, insbesondere des Anzeigesystems des Kraftfahrzeugs, und dem anfänglichen Bildausschnitt. Die Prognose betrifft dabei eine Relativposition des Kopfes und besonders bevorzugt der Augen des Nutzers und des anfänglichen Bildausschnitts. Alternativ oder zusätzlich wird eine anfängliche Relativposition von Nutzer und Bildschirm detektiert. Sowohl die anfängliche Relativposition als auch die Prognose der Änderung der Relativposition zwischen Nutzer und anfänglichem Bildausschnitt erfolgt somit bevorzugt modellbasiert und/oder messwertbasiert. Hierzu können beispielsweise von einem Nutzer eingegebene Nutzerdaten, beispielsweise zu Körpergröße, Gewicht, Rumpflänge etc. in Kombination mit einem Menschmodell, beispielsweise RAMSIS, zum Einsatz kommen. Die Prognose basiert dabei auf der prognostizierten Bewegungsänderung des Kraftfahrzeugs. Mit anderen Worten wird prognostiziert, wie sich der Körper des Nutzers in Reaktion auf die Bewegungsänderung des Kraftfahrzeugs relativ zum Bildausschnitt bewegt. Derartige Simulationen sind beispielsweise aus Crash-Simulationen und dergleichen weithin bekannt und können vom Fachmann in routinemäßiger Arbeit durchgeführt werden.

Erfindungsgemäß wird in einem weiteren Verfahrensschritt ein angepasster Bildausschnitt auf dem Bildschirm des Anzeigesystems dargestellt, wobei der Bildausschnitt basierend auf der prognostizierten Änderung der Relativposition zwischen Nutzer und dem anfänglichen Bildausschnitt angepasst wurde. Die Anpassung betrifft dabei die Position, die Ausrichtung und/oder die Größe des Bildausschnitts innerhalb des Bildsignals, insbesondere innerhalb der zumindest einen Bilddatei des Bildsignals. Die Form der Anpassung erfolgt dabei bevorzugt derart, dass eine wahrgenommene Relativposition zwischen dem Nutzer und dem Bildausschnitt erhalten bleibt. Mit anderen Worten erfolgt eine Anpassung des Bildausschnitts derart, dass eine vom Nutzer wahrgenommene Relativposition zwischen ihm/ihr und dem anfänglichen Bildausschnitt und eine wahrgenommene Relativposition zwischen ihm/ihr und dem angepassten Bildausschnitt (im Wesentlichen) gleich oder zumindest hochgradig ähnlich sind. Die wahrgenommene Relativposition hängt dabei von verschiedenen Faktoren ab, auf die auf unterschiedliche Weise Einfluss genommen werden kann, wie im Folgenden im Detail beschrieben wird.

Das Verfahren gemäß der vorliegenden Erfindung ermöglicht somit vorteilhaft die Anpassung von in einem Fahrzeug dargestellten graphischen Inhalten an die aufgrund der Bewegung des Fahrzeugs von einem Passagier verspürten Bewegungen. Grundlage ist dabei die Abschätzung einer Veränderung der Relativlage des Passagiers, insbesondere von dessen Kopf und Augen, zu dem Bildschirm der Anzeigevorrichtung, aufgrund der auf den Passagier wirkenden und aus der Bewegung des Fahrzeugs als bewegtem Bezugssystem resultierenden Inertialkräfte. Mit anderen Worten erlaubt das erfindungsgemäße Verfahren insbesondere den Ausgleich von sich auf den Passagier auswirkenden Beschleunigungsvorgängen des Kraftfahrzeugs, insbesondere beim Anfahren, Bremsen sowie bei Kurvenfahrten. Der Reisekrankheit wird somit besonders effektiv entgegengewirkt, da gerade Beschleunigung Unwohlsein beim Fahrer auslösen kann, wohingegen Fahrten mit konstantem Tempo oft nicht als unangenehm empfunden werden. Ferner vorteilhaft ist das erfindungsgemäße Verfahren vom konkreten Fahrzeugen unabhängig und funktioniert mit allen Verkehrsmitteln. Eine universelle Einsetzbarkeit des Verfahrens kann beispielsweise durch eine normierte Schnittstelle zwischen dem Fahrzeug mit der Sensorik einerseits und dem Infotainment-Gerät, wie einer VR-Brille, andererseits, erreicht werden.

Bevorzugt erfolgt im erfindungsgemäßen Verfahren die Prognose der Bewegungsänderung des Kraftfahrzeugs, die Prognose der Änderung der Relativposition zwischen dem Nutzer und dem anfänglichen Bildausschnitt und/oder die Anpassung des Bildausschnitts zum Darstellen eines angepassten Bildausschnitts mit zeitlichem Vorlauf. Der zeitliche Vorlauf der Prognosen dient insbesondere der Kompensation der notwendigen Rechen- und Verarbeitungszeit des Systems. Diese liegen in etwa zwischen 0,2 und 1s und ein Vorlauf der Prognosen um diese Zeitspannen ist somit bevorzugt. Mit dem zeitlichen Vorlauf der Anpassung des Bildausschnitts kann hingegen wahrnehmungspsychologisch der Ausgleich zwischen Wahrnehmung von Bildinhalten und Inertialkräften verbessert werden, insbesondere, da letztere unmittelbar erfolgt.

Bevorzugt ist die vom Nutzer wahrgenommene Relativposition zwischen ihm/ihr und dem Bildausschnitt als konstant zu haltende Regelgröße durch eine scheinbare Größe des Bildausschnitts bestimmt. Unter der scheinbaren Größe wird dabei der Sehwinkel, Gesichtswinkel beziehungsweise die Winkelausdehnung des Bildausschnitts aus der Sicht des Nutzers verstanden. Diese hängt sowohl von der Entfernung des Beobachters und dem Bildausschnitt, wie auch der tatsächlichen Größe des Bildausschnitts zusammen. Ändert sich also die Entfernung, also die Relativposition zwischen Nutzer und Bildausschnitt, kann die daraus resultierende Änderung des Sehwinkels durch eine Änderung der tatsächlichen Größe des Bildausschnitts kompensiert werden. Bevorzugt weist das Verfahren daher ferner den Schritt des Anpassens der Größe des Bildausschnitts zum Erhalt einer vom Nutzer wahrgenommenen scheinbaren Größe des Bildausschnitts auf. Das Anpassen der Größe des Bildausschnitts erfolgt dabei bevorzugt durch ein Heraus- oder Hereinzoomen des dargestellten Bildausschnitts. Mit anderen Worten wird der gleiche Ausschnitt des Bildsignals auf einem größeren oder kleineren Ausschnitt des Bildschirms dargestellt. Indem zunächst nur ein anfänglicher Bildausschnitt dargestellt wurde, ist dabei der Platz zum Vergrößern gegeben. Alternativ wird der dargestellte Ausschnitt des Bildsignals vergrößert oder verkleinert. Mit anderen Worten wird im selben Ausschnitt des Bildschirms ein größerer oder kleinerer Ausschnitt des Bildsignals dargestellt, was für den Nutzer den Eindruck eines Heraus- oder Hereinzoomens erweckt. Dies setzt das Darstellen eines anfänglichen Bildausschnitts voraus.

Alternativ oder zusätzlich ist die vom Nutzer wahrgenommene Relativposition zwischen ihm/ihr und dem Bildausschnitt als konstant zu haltende Regelgröße durch die Blickrichtung zu einem Fixpunkt der Bildebene des Bildausschnitts bestimmt. Die Blickrichtung bezeichnet dabei insbesondere einen Winkel zwischen der Bildebene und einem zwischen dem Beobachter und dem Bildausschnitt angenommenen Strahlengang. Bevorzugt wird angenommen, dass ein solcher Strahlengang senkrecht zum anfänglichen Bildausschnitt steht. Eine Anpassung des Bildausschnitts erfolgt in Abhängigkeit der Veränderung der Relativposition zwischen Nutzer und Bildausschnitt dann beispielsweise derart, dass der Strahlengang auch senkrecht auf dem angepassten Bildausschnitt steht. Somit kann beispielsweise eine beschleunigte Bewegung des Nutzers relativ zum Bildausschnitt kompensiert werden, die nicht in einer Änderung des senkrechten Abstandes zwischen dem Nutzer und dem Bildausschnitt resultiert, insbesondere in Kurvenfahrten. Bevorzugt erfolgt daher ein Anpassen der Lage des Bildausschnitt innerhalb des Bildschirms und/oder innerhalb des Bildsignals. Somit wird entweder der anfänglich dargestellte Bildausschnitt auf dem Bildschirm verschoben oder der dargestellte Bildausschnitt des Bildsignals ändert sich, indem dieser verschoben wird. So kann beispielsweise eine Seitwärtsbewegung des Kopfes des Nutzers durch ein seitwärts Verschieben des Bildausschnitts in dieselbe Richtung wie die Kopfbewegung ausgeglichen werden.

Ebenfalls bevorzugt erfolgt eine Rotation der Bildebene zum Erhalt der Blickrichtung des Nutzers zu einem Fixpunkt des Bildausschnitts. Somit kann beispielsweise ebenfalls erreicht werden, dass ein anfänglich senkrecht auf dem Bildausschnitt stehender Strahlengang auch weiterhin senkrecht auf dem Bildausschnitt steht. Diese bevorzugte Ausführungsform setzt dabei in der Regel voraus, dass das Anzeigesystem zum Darstellen von dreidimensionalen Inhalten ausgebildet ist und dass das Bildsignal dreidimensional darstellbare Inhalte enthält. Nur so ist eine Rotation der Bildebene, beispielsweise durch Änderung von Parallaxe-Informationen, realisierbar. Mit anderen Worten erfolgt in dieser bevorzugten Durchführungsform eine Anpassung einer Perspektive in Abhängigkeit der Fahrzeugbewegung. So führt beispielsweise eine Querführung des Fahrzeugs zu einem Links-Rechts-Schwenk der Perspektive, eine Längsführung des Fahrzeugs führt zu einem Hinein- oder Herauszoomen der Perspektive und eine Vertikalbeschleunigung führt zu einer Auf- oder Ab-Bewegung der Perspektive, wobei die Stärke des einwirkenden Beschleunigungswertes zu einer entsprechend größeren oder kleineren Änderung der Perspektive der Betrachtung führt. Ebenfalls bevorzugt schließt die Rotation der Bildebene des Bildausschnitts eine perspektivische Verzerrung des Bildausschnitts mit ein. Perspektivische Verzerrungen sind dem Fachmann bekannt.

Die Durchführung eines Verfahrens für dreidimensionale Inhalte ist auf verschiedene Weise realisierbar.

Gemäß einer ersten bevorzugten Durchführungsform wird für bestehendes Bildmaterial im Nachgang ein 3D-Modell errechnet. Voraussetzung dafür ist, dass das jeweilige Bildsignal, beispielsweise ein Spielfilm, computergestützt in 3D-Objekte aufgelöst werden kann. Dies setzt beispielsweise die Bilderkennung von Objekten und Annahme über deren voraussichtliche Beschaffenheit voraus. Dem Fachmann sind Anwendungen für das Auflösen eines Bildsignals in 3D Objekte aus dem Stand der Technik bekannt.

Gemäß einer zweiten bevorzugten Durchführungsform existiert bereits ein 3D-Modell des dargestellten Bildsignals beziehungsweise basiert das Bildsignal auf einem 3D-Modell. Derartige 3D-Modelle bilden beispielsweise die Basis der Bildsignale von Computerspielen, wie beispielsweise 3D-Ego-Shooter-Spielen aus einer Ich-Perspektive des Spielers. Somit ist eine Anpassung der Kameraführung durch eine entsprechende Schnittstelle zur Graphik-Engine des Computerspiels möglich. Bei der Anpassung der Kameraperspektive sind dabei von dem 3D-Modell gesetzte Grenzen zu berücksichtigen, wie zum Beispiel der Boden, Umgebungsobjekte und dergleichen. Insbesondere sollten keine Artefakte entstehen, wie beispielsweise dass ein Betrachter in den Himmel abhebt, Bodenkontakt verliert, feste Körper durchdringt oder in den Boden eintaucht.

Ferner bevorzugt wird in einem Verfahren der anfängliche Bildausschnitt wiederhergestellt, sofern für eine vorbestimmte Zeitspanne keine Änderung des Bewegungszustands des Kraftfahrzeugs prognostiziert wird. Mit anderen Worten wird die Anpassung des Bildausschnitts zum Erzeugen des angepassten Bildausschnitts, wie oben beschrieben, rückgängig gemacht. Diese Wiederherstellung des anfänglichen Bildausschnitts erfolgt bevorzugt sofern die Bewegungsdynamik für mehr als eine gewisse Zeitspanne konstant ist, wobei die Zeitspanne bevorzugt einer von dem Nutzer erlebbaren Zeitveränderung entspricht. Besonders bevorzugt beträgt die Zeitspanne mindestens 100ms, 200ms, 300ms, 400ms oder 500ms. Das Rückführen des angepassten Bildausschnitts auf den anfänglichen Bildausschnitt erfolgt bevorzugt langsam und für den Nutzer nahezu unmerklich. Somit soll verhindert werden, dass aus der Rückführung auf den anfänglichen Bildausschnitt eine Diskrepanz zur wahrgenommenen Bewegung resultiert.

In einer Durchführungsform des erfindungsgemäßen Verfahrens weist der anfängliche und/oder der angepasste Bildausschnitt eine kontextabhängige *region of interest,* ROI, des Bildsignals auf. Bevorzugt wird diese ROI anhand von Metadaten bestimmt, die beispielsweise für Filminhalte festlegen in welchem Ausschnitt eines Bildsignals für die Handlung wesentlichen Inhalte dargestellt werden. Sowohl bei der Auswahl des anfänglichen Bildausschnitts als auch beim Anpassen des Bildausschnitts sollten dann derartige Informationen zu ROls berücksichtigt werden. Anhand einer solchen ROI kann ebenfalls bestimmt werden, dass das erfindungsgemäße Verfahren auf bestimmte zeitliche Abschnitte eines Bildsignals nicht anwendbar ist. So kann beispielsweise in einem Film der künstlerische Ausdruck berücksichtigt werden, indem gewisse zentrale Szenen für die Anwendung des erfindungsgemäßen Verfahrens gesperrt werden. Alternativ kann das erfindungsgemäße Verfahren mit Einschränkungen so durchgeführt werden, dass wesentliche Handlungselemente sichtbar bleiben, wenn handlungsrelevante Szenen verändert werden. Dies kann beispielsweise durch Beschränkung eines maximalen Zoomfaktors für eine Szene des Bildsignals erfolgen.

Die vorliegende Erfindung betrifft ferner ein Kraftfahrzeug, insbesondere einen PKW mit Verbrennungs-, Hybrid-, oder Elektromotor. Das erfindungsgemäße Kraftfahrzeug weist zumindest einen zum Erfassen von Umgebungsdaten eingerichteten ersten Sensor, zumindest einen zum Erfassen von Fahrzeugdaten eingerichteten zweiten Sensor und zumindest ein Kommunikationsmodul auf. Das Kraftfahrzeug weist ferner ein zum Darstellen von graphischen Inhalten eingerichtetes Anzeigesystem mit einem Bildschirm auf. Bevorzugt weist das Anzeigesystem ferner zumindest einen Speicher und/oder eine Recheneinheit, insbesondere eine GPU, auf. Der Speicher und/oder die Recheneinheit können dabei exklusiv dem Anzeigesystem zugeordnet oder ebenfalls Bestandteil einer weiteren Steuereinheit sein. Das erfindungsgemäße Kraftfahrzeug weist ferner eine Steuereinheit auf, die dafür eingerichtet ist, mittels des Anzeigesystems einen anfänglichen Bildausschnitt eines Bildsignals auf dem Bildschirm darzustellen. Die Steuereinheit ist ferner dazu eingerichtet, ein die Umgebung des Kraftfahrzeugs betreffendes Umgebungssignal von dem ersten Sensor, ein das Kraftfahrzeug betreffendes Fahrzeugsignal von dem zweiten Sensor und/oder ein das Kraftfahrzeug oder dessen Umgebung betreffendes Kommunikationssignal von dem Kommunikationsmodul zu empfangen. Das erfindungsgemäße Kraftfahrzeug ist ferner dazu eingerichtet, basierend auf dem Umgebungssignal, dem Fahrzeugsignal und/oder dem Kommunikationssignal eine Änderung eines Bewegungszustands des Kraftfahrzeugs zu prognostizieren. Das Kraftfahrzeug ist weiter dazu eingerichtet, basierend auf der prognostizierten Änderung des Bewegungszustands des Kraftfahrzeugs eine Änderung der Relativposition zwischen einem Nutzer und dem Bildausschnitt zu prognostizieren und ist schließlich dazu eingerichtet, basierend auf der prognostizierten Änderung der Relativposition zwischen dem Nutzer und dem anfänglichem Bildausschnitt einen angepassten Bildausschnitt auf dem Bildschirm anzuzeigen. Die Steuereinheit ist somit zum Durchführen des erfindungsgemäßen Verfahrens, insbesondere in seinen bevorzugten Durchführungsformen, eingerichtet und ausgebildet.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Kraftfahrzeugs gemäß einer Ausführungsform;
- Figur 2: ein schematisches Ablaufdiagram des erfindungsgemäßen Verfahrens gemäß einer Durchführungsform ;
- Figur 3: die konventionelle Darstellung eines Bildausschnitts in einem Fahrzeug während einer Fahrt des Fahrzeugs mit konstanter Geschwindigkeit;
- Figur 4: die Anpassung eines in einem Fahrzeug dargestellten Bildausschnitts während einer angebremsten Fahrt des Fahrzeugs in Abhängigkeit der Relativposition zu einem Nutzer gemäß einer Durchführungsform;
- Figur 5: die Anpassung eines in einem Fahrzeug dargestellten Bildausschnitts während einer beschleunigten Fahrt des Fahrzeugs in Abhängigkeit der Relativposition zu einem Nutzer gemäß einer Durchführungsform;
- Figur 6: die Anpassung eines in einem Fahrzeug dargestellten Bildausschnitts während der Fahrt des Fahrzeugs durch eine Linkskurve in Abhängigkeit der Relativposition zu einem Nutzer gemäß einer Durchführungsform; und
- Figur 7: die Anpassung eines in einem Fahrzeug dargestellten Bildausschnitts während der Fahrt des Fahrzeugs durch eine Rechtskurve in Abhängigkeit der Relativposition zu einem Nutzer gemäß einer Durchführungsform.

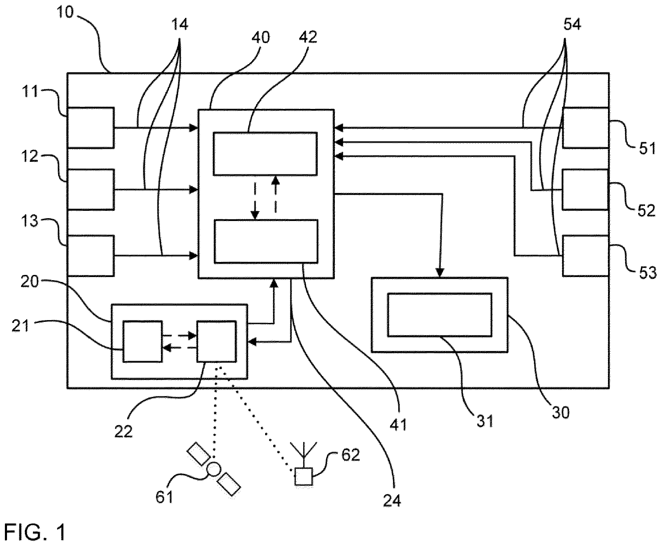

Figur 1 zeigt eine schematische Darstellung, insbesondere ein Blockdiagram eines beispielhaften Kraftfahrzeugs 10, insbesondere eines zweispurigen Kraftfahrzeugs mit Verbrennungs-, Elektro- oder Hybridmotor. Das Kraftfahrzeug 10 umfasst eine Vielzahl erster Sensoren, insbesondere einen ersten Sensor 11, einen zweiten Sensor 12, und einen dritten Sensor 13. Die ersten Sensoren 11, 12, 13 sind eingerichtet zum Erfassen von Umweltinformationen beziehungsweise Umgebungsdaten des Kraftfahrzeugs 10 und umfassen beispielsweise ein LIDAR-System oder andere Abstandssensoren wie beispielsweise Ultraschallsensoren zum Erfassen von Abständen zu das Kraftfahrzeug 10 umgebenden Objekten und eine Kamera zum Erfassen eines Bildes einer das Kraftfahrzeug 10 unmittelbar umgebenden Umwelt. Die ersten Sensoren 11, 12, 13 übertragen die von ihnen erfassten Umgebungssignale an eine Steuereinheit 40 des Kraftfahrzeugs 10.

Das Kraftfahrzeug 10 weist ferner eine Vielzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Kraftfahrzeug 10 selbst betreffenden Zustandsdaten, wie beispielsweise aktuelle Lage- und Bewegungsinformationen des Kraftfahrzeugs. Bei den zweiten Sensoren handelt es sich folglich beispielsweise um Geschwindigkeitssensoren, Beschleunigungssensoren, Neigungssensoren, Innenraumbewegungsmeldern, Drucksensoren in den Fahrzeugsitzen oder dergleichen. Die zweiten Sensoren 51, 52, 53 übermitteln die von ihnen erfassten Zustandssignale an die Steuereinheit 40 des Kraftfahrzeugs 10.

Das Kraftfahrzeug 10 weist ferner ein Kommunikationsmodul 20 mit einem internen Speicher 21 und einem oder mehreren Transpondern beziehungsweise Sendeempfängern 22 auf. Bei den Transpondern 22 handelt es sich um Funk- , WLAN-, GPS- oder Bluetooth-Sendeempfängern oder dergleichen. Der Transponder 22 kommuniziert mit dem internen Speicher 21 des Kommunikationsmoduls 20, beispielsweise über einen geeigneten Datenbus. Mittels des Transponders 22 kann beispielsweise die aktuelle Position des Kraftfahrzeugs 10 durch Kommunikation mit einem GPS Satelliten 61 ermittelt und diese im internen Speicher 21 gespeichert werden. Das Kommunikationsmodul 20 kommuniziert mit der Steuereinheit 40.

Darüber hinaus ist das Kommunikationsmodul 20 dafür eingerichtet, mit einem persönlichen Kommunikationsgerät (zum Beispiel einem Smartphone oder einem Computer) eines Fahrers, Besitzers oder Halters des Kraftfahrzeugs 10 zu kommunizieren. Beispielsweise ist das Kommunikationsmodul 20 dazu eingerichtet über ein UMTS (Universal Mobile Telecommunication Service) oder LTE (Long Term Evolution) Mobilfunknetz mit dem Kommunikationsgerät des Fahrers oder Halters des Kraftfahrzeugs 10 zu kommunizieren. Die Kommunikation zwischen dem Kommunikationsgerät des Fahrers oder Halters und dem Kraftfahrzeug 10 ist dabei bevorzugt in eine entsprechende App eingebettet.

Das Fahrzeug 10 weist ferner ein Anzeigesystem 30 zum graphischen Darstellen von Inhalten auf. Das Anzeigesystem 30 ist insbesondere zum Darstellen von Bildsignalen ausgebildet. Diese Bildsignale können dabei in einem Speicher (nicht dargestellt) des Anzeigesystems 30 oder einer anderen Steuereinheit des Fahrzeugs 10 oder auf einem externen und mit dem Fahrzeug 10 verbundenen Datenträger vorliegen. In diesem Fall wird das Bildsignal bevorzugt aus Filmdateien erzeugt. Ebenfalls bevorzugt wird das Bildsignal während des Ausführens eines Programms, beispielsweise eines Computerspiels, erzeugt. Bei dem Programm kann es sich jedoch ebenfalls um eine Office-Anwendung, eine Browser-basierte Anwendung oder einen eBook-Reader handeln. Das Bildsignal besteht bevorzugt aus einer zeitlichen Abfolge von Bilddateien, die auf einem Bildschirm 31 des Anzeigesystems darstellbar sind. Bei dem Bildschirm 31 handelt es sich um einen Farbbildschirm, wie einen LED-, LCD- oder OLED-Display, bevorzugt mit einer Touch-Funktionalität. Ebenfalls bevorzugt ist das Anzeigesystem 30 zum Darstellen von 3D-Informationen, beispielsweise basierend auf zu Pixeln hinterlegten Parallaxe-Informationen, ausgebildet. Hierzu kann beispielsweise eine Mehrkanalausgabe des Bildsignals erfolgen, wobei die Kanäle beispielsweise durch spektrales oder zeitliches Multiplexing voneinander getrennt sind. Ebenfalls bevorzugt ist das Anzeigesystem 30 zum Erzeugen von 3D-Informationen aus 2D-Bildsignalen ausgebildet.

Das Kraftfahrzeug 10 weist ferner eine erfindungsgemäße Steuereinheit 40 auf, welche zum Durchführen der erfindungsgemäßen Verfahren, wie im Folgenden im Detail erläutert, eingerichtet ist. Hierzu verfügt die Steuereinheit 40 über einen internen Speicher 41 und eine CPU 42, welche miteinander kommunizieren, beispielsweise über einen geeigneten Datenbus. Darüber hinaus steht die Steuereinheit in Kommunikationsverbindung mit zumindest den ersten Sensoren 11, 12, 13, den zweiten Sensoren 51, 52, 53, dem Kommunikationsmodul 20 und dem Anzeigesystem 30, beispielsweise über eine oder mehrere jeweilige CAN-Verbindungen, eine oder mehrere jeweilige SPI-Verbindungen oder andere geeignete Datenverbindungen.

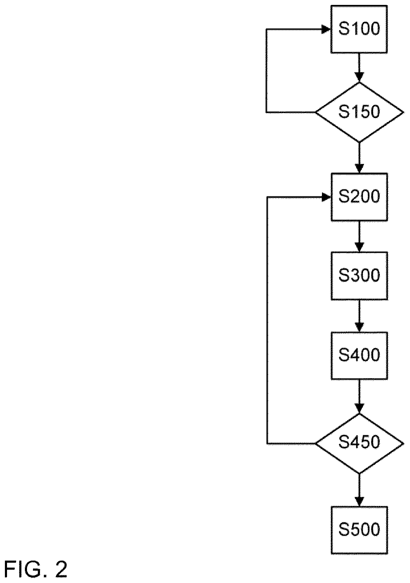

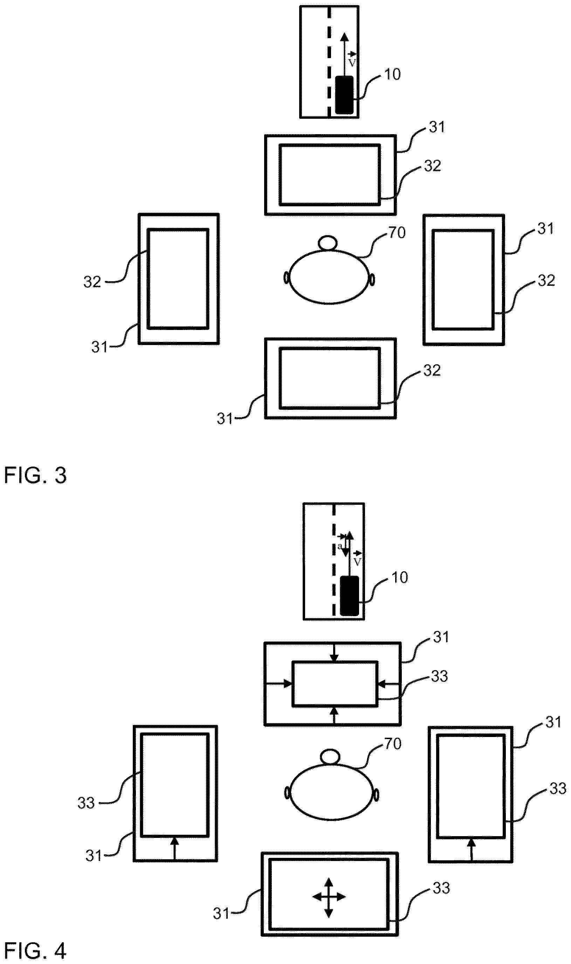

Figur 2 zeigt ein schematisches Ablaufdiagram des erfindungsgemäßen Verfahrens gemäß einer Durchführungsform. Die Figuren 3 bis 7 zeigen die Darstellung eines anfänglichen Bildausschnitts 32 und gegebenenfalls eines angepassten Bildausschnitts 33 in verschiedenen Fahrsituationen eines Kraftfahrzeugs 10. In der Beschreibung des Ablaufdiagramms der Figur 2 wird an geeigneter Stelle auf die Darstellungen in den Figuren 3 bis 7 Bezug genommen.

Dabei beginnt das Verfahren in Schritt S100 mit der Darstellung eines anfänglichen Bildausschnitts 32 eines Bildsignals, wobei der anfängliche Bildausschnitt in etwa 80% der Fläche des Bildsignals ausmacht. Dieser Schritt S100 ist in Figur 3 dargestellt, welche die konventionelle Darstellung eines anfänglichen Bildausschnitts 32 im Fahrzeug 10 während einer Fahrt des Fahrzeugs 10 mit konstanter Geschwindigkeit zeigt. Dabei sind in einem oberen Teil der Abbildung das Kraftfahrzeug 10 auf einer Straße und mittels eines Geschwindigkeitsvektors dessen konstante Fahrt dargestellt. Ferner ist ein Nutzer 70 dargestellt, dessen Nase die Blickrichtung des Nutzers 70 symbolisiert. Ferner sind Bildschirme 31 um den Nutzer herum dargestellt, wobei die verschiedenen Bildschirme 31 verschiedene Relativanordnungen von Nutzer 70 und Bildschirm 31 beziehungsweise Fahrzeug 10 darstellen. Ein oberhalb des Nutzers 70 dargestellter Bildschirm 31 entspricht dabei einem in Fahrtrichtung vor dem Nutzer angeordneten Bildschirm 31 und ein unterhalb des Nutzers 70 dargestellter Bildschirm 31 entspricht dabei einem in Fahrtrichtung hinter dem Nutzer 70 angeordneten Bildschirm 31. Ferner entspricht ein links neben dem Nutzer 70 dargestellter Bildschirm 31 einem in Fahrtrichtung links neben dem Nutzer angeordneten Bildschirm 31 und entspricht ein rechts neben dem Nutzer 70 dargestellter Bildschirm 31 einem in Fahrtrichtung rechts neben dem Nutzer 70 angeordneten Bildschirm 31. Wie in Figur 3 ferner dargestellt, ist die Darstellung des anfänglichen Bildausschnitts 32 auf jedem der Bildschirme 31 gleich, unabhängig von der relativen Anordnung von Bildschirm 31 und Nutzer 70.

Im Schritt S150 des Verfahrens erfolgt ferner eine Abschätzung, ob eine Änderung des Bewegungszustandes des Kraftfahrzeugs 10 zu erwarten ist. Dabei handelt es sich um eine qualitative Abschätzung, die insbesondere der sinnvollen Nutzung von Rechenressourcen dient. Wird in diesem Schritt S150 eine zu erwartende Änderung des Bewegungszustandes des Kraftfahrzeugs 10 bejaht, geht das Verfahren weiter zu Schritt S200, wird eine solche zu erwartende Veränderung hingegen verneint, geht das Verfahren zurück zu Schritt S100.

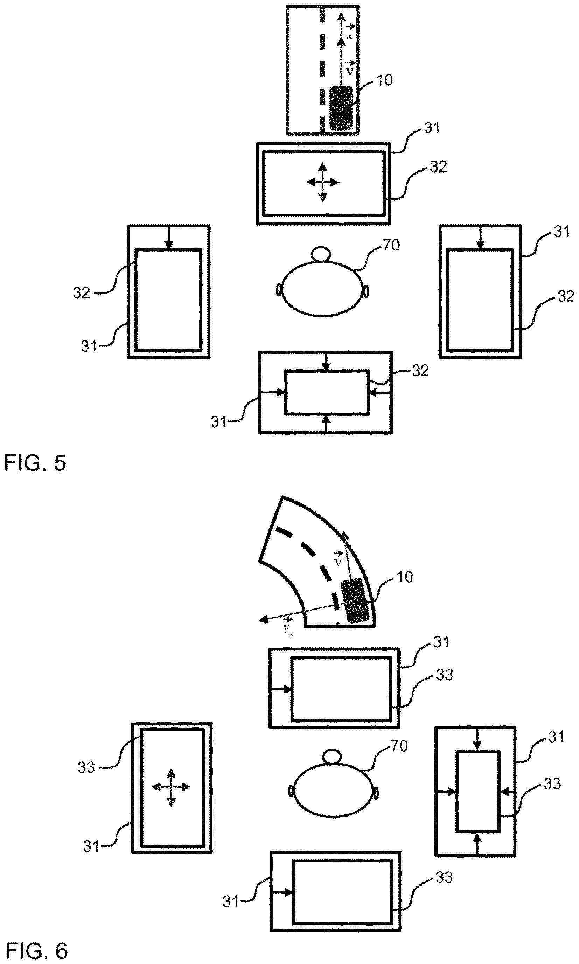

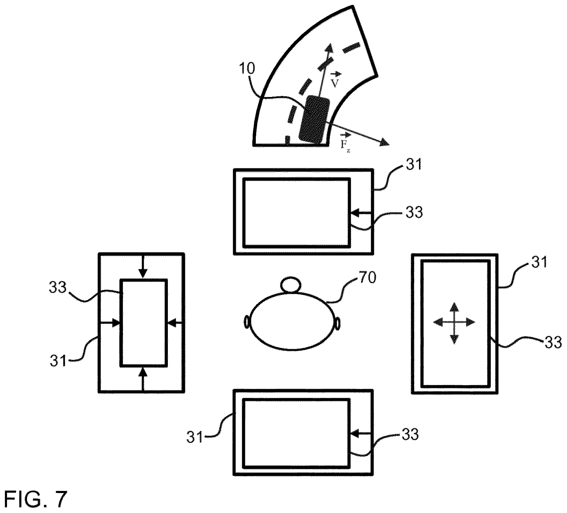

In Schritt S200 erfolgt sodann eine Prognose der Änderung des Bewegungszustandes des Kraftfahrzeugs 10 als eine qualitative Vorhersage einer zukünftigen Bewegung des Kraftfahrzeugs 10. Dabei wird die Bewegung insbesondere für eine Zeitspanne von zumindest 0.2s, bevorzugt zumindest 0.5s, und besonders bevorzugt für noch längere Zeiträume ermittelt. Die zukünftige Bewegung des Fahrzeugs 10 wird dabei insbesondere hinsichtlich zu erwartender Beschleunigung des Kraftfahrzeugs 10 prognostiziert, wobei besonders bevorzugt Kraft und Richtung der zu erwartenden Kraftwirkung beziehungsweise der zu erwartenden Beschleunigung prognostiziert wird. Ergebnisse einer solchen Prognose sind beispielhaft in den oberen Abschnitten der Figuren 4 bis 7 dargestellt, wobei in Figur 4 ein gerades Abbremsen des Kraftfahrzeugs 10 prognostiziert wird, in Figur 5 ein gerades Beschleunigen des Kraftfahrzeugs 10 prognostiziert wird und in den Figuren 6 und 7 Kurvenfahrten des Kraftfahrzeugs 10 mit den dabei jeweils wirkenden Kräften prognostiziert werden.

In einem nächsten Schritt S300 wird anhand der prognostizierten Änderung des Bewegungszustandes des Kraftfahrzeugs 10 eine Prognose erstellt, inwieweit eine Änderung einer Relativposition zwischen dem Gesichtsfeld des Nutzers 70, insbesondere den Blickpunkt des Nutzers 70 symbolisierenden Fixpunkt, und dem dargestellten anfänglichen Bildausschnitt 32 zu erwarten ist. Diese Prognose erfolgt bevorzugt unter Zuhilfenahme von einem 3D-Menschmodell, wie beispielsweise RAMSIS, oder zumindest unter Zuhilfenahme von durch ein solches Modell gewonnenen, und beispielsweise in einem Look-Up-Table, abgelegten Daten. Ferner bevorzugt gehen in diese Prognose Körperdaten des Nutzers 70, beispielsweise dessen Körpergröße, Gewicht, Rumpflänge, etc. ein. Mittels der Prognose der Relativposition zwischen Nutzer 70 und anfänglichem Bildausschnitt 32 kann somit ermittelt werden, was für eine vom Nutzer 70 wahrgenommene Änderung einer wahrgenommenen Relativposition zwischen Nutzer 70 und Bildausschnitt 32 zu erwarten ist.

Beispielhaft würde in der in Figur 3 dargestellten Situation keine Änderung der Relativposition zwischen Nutzer 70 und Bildausschnitt 32 prognostiziert. In Figur 4 hingegen wäre zu erwarten, dass sich der Kopf des Nutzers 70 beim Abbremsen auf einen in Fahrtrichtung davor befindlichen Bildschirm 31 (und somit einem darauf dargestellten Bildausschnitt 32) zubewegt und von einem in Fahrtrichtung dahinterliegenden Bildschirm 31 fortbewegt. Im Gegensatz wäre beim Beschleunigen in Figur 5 zu erwarten, dass sich der Kopf des Nutzers 70 von einem in Fahrtrichtung davor befindlichen Bildschirm 31 fort bewegt und auf einen in Fahrtrichtung dahinterliegenden Bildschirm 31 hin bewegt. Ferner wäre beim Abbremsen in Figur 4 zu erwarten, dass sich der Kopf des Nutzers 70 weitgehend parallel zu den seitlich angebrachten Bildschirmen seitwärts in Fahrrichtung des Kraftfahrzeugs 10 bewegt und entsprechend beim Beschleunigen in Figur 5 seitwärts parallel entgegen der Fahrtrichtung relativ zu diesen Bildschirmen 31 bewegt. Bei den Kurvenfahrten der Figuren 6 und 7 wirken hingegen Seitenkräfte auf den Nutzer 70, so dass sich der Kopf des Nutzers 70 seitwärts und weitgehend parallel zu den in Fahrtrichtung vor beziehungsweise hinter dem Nutzer 70 angeordneten Bildschirmen 31 bewegt. Hingegen erfolgt eine Annäherung des Kopfes des Nutzes 70 zu einem der seitlich von diesem angeordneten Bildschirme 31 sowie eine Entfernung des Kopfes des Nutzers 70 vom jeweils anderen der seitlich vom Nutzer 70 angeordneten Bildschirme 31.

Basierend auf dieser Prognose einer Änderung der Relativposition zwischen dem Nutzer 70 und dem anfänglichen Bildausschnitt 32 (beziehungsweise dem diesen darstellenden Bildschirm 31) erfolgt in Schritt S400 ein Anpassen des dargestellten Bildausschnitts 32 und das Anzeigen eines angepassten Bildausschnitts 33. Dabei erfolgt die Anpassung des Bildausschnitts 33 derart, dass eine von dem Nutzer 70 nach der prognostizierten Änderung der Relativposition zwischen Nutzer 70 und Bildausschnitt wahrgenommene Relativposition zwischen dem angepassten Bildausschnitt 33 und dem Nutzer einer wahrgenommenen Relativposition zwischen dem anfänglichen Bildausschnitt 32 und dem Nutzer 70 weitgehend entspricht. Ohne eine Änderung der Relativposition bleibt der dargestellte Bildausschnitt 32 somit unverändert, wie auf den Bildschirmen 31 in der Figur 3 dargestellt. Hingegen erfolgt beim Abbremsen des Kraftfahrzeugs 10, wie in der Figur 4 dargestellt, eine Verkleinerung eines Bildausschnitts 33, der auf einem in Fahrtrichtung vor dem Fahrer angeordneten Bildschirm 31 dargestellt ist. Hingegen erfolgt einer Vergrößerung eines Bildausschnitts 33, der in Fahrtrichtung hinter dem Fahrer angeordnet ist. Auf den seitlich von dem Fahrer angeordneten Bildschirmen 31 erfolgt einer Verlagerung der Bildausschnitte 33 in Fahrtrichtung, um einer Bewegung des Kopfes des Nutzers 70 zu folgen, so dass für den Nutzer 70 eine wahrgenommene Größe des und eine Blickrichtung auf den Bildausschnitt 33 gleich bleiben.

In der Figur 5 ist entsprechend dargestellt, wie in Abhängigkeit von der Relativlage der Bildschirme 31 zu dem Nutzer 70 eine Anpassung der Bildausschnitte 33 beim vorwärts Beschleunigen des Kraftfahrzeugs 10 erfolgt. Dabei wird ein Bildausschnitt 33 vergrößert, der auf einem in Fahrtrichtung vor dem Nutzer 70 angeordneten Bildschirm gezeigt wird. Entgegengesetzt wird ein Bildausschnitt 33 verkleinert, der auf einem in Fahrtrichtung hinter dem Nutzer 70 angeordneten Bildschirm gezeigt wird. Auf den seitlich von dem Fahrer angeordneten Bildschirmen 31 erfolgt einer Verlagerung der Bildausschnitte 33 entgegen der Fahrtrichtung, um einer Bewegung des Kopfes des Nutzers 70 zu folgen, so dass für den Nutzer 70 eine wahrgenommene Größe des und eine Blickrichtung auf den Bildausschnitt 33 gleich bleiben.

In den Figuren 6 und 7 ist entsprechend dargestellt, wie in Abhängigkeit von der Relativlage der Bildschirme 31 zu dem Nutzer 70 eine Anpassung der Bildausschnitte 33 bei Kurvenfahrten des Kraftfahrzeugs 10 erfolgt, wobei Figur 6 die Fahrt durch eine Linkskurve und Figur 7 die Fahrt durch eine Rechtskurve darstellen. Da bei Kurvenfahrten des Kraftfahrzeugs 10 Seitenkräfte auf den Nutzer 70 wirken, erfolgt somit eine Vergrößern beziehungsweise Verkleinern der Bildausschnitte 33 auf den seitlich vom Nutzer 70 angeordneten Bildschirmen 31. Dabei erfolgt ein Vergrößern des Bildausschnitts 33 stets auf dem Bildschirm 31 von dem sich der Kopf des Nutzers 70 aufgrund der Seitenkräfte fortbewegt und erfolgt ein Verkleinern stets auf dem Bildschirm 31 auf den sich der Kopf des Nutzers 70 aufgrund der Seitenkräfte hin bewegt. Auf den in Fahrtrichtung vor beziehungsweise hinter dem Nutzer 70 angeordneten Bildschirmen 31 erfolgt hingegen eine seitliche Verlagerung der Bildausschnitte 33 jeweils in Richtung der Außenseite der jeweils durchfahrenen Kurve als Wirkungsrichtung der Zentrifugalkraft. Aufgrund dieser Anpassungen der Bildausschnitte 33 bleibt auch bei den Kurvenfahrten eine vom Fahrer wahrgenommene Größe der Bildausschnitte 33 sowie dessen Blickrichtung auf diese konstant.

Nach der Anpassung des Bildausschnitts in Schritt S450 wird in einem nächsten Schritt S450 prognostiziert, ob eine Bewegung des Kraftfahrzeugs 10 für eine kommende Zeitspanne Δt, beispielsweise für eine kommende Zeitspanne von etwa 500 ms, konstant bleibt. Mit anderen Worten wird geprüft, ob eine Bewegungsänderung des Kraftfahrzeugs 10 und somit eine auf den Nutzer 70 wirkende Beschleunigung für diese Zeitspanne Δt nicht zu erwarten ist. Ergibt diese Prüfung jedoch, dass eine Bewegungsänderung des Kraftfahrzeugs 10 während Δt zu erwarten ist, geht das Verfahren zu Schritt S200 über, in dem eine Prognose der spezifischen Bewegungsänderung, also beispielsweise gerades Beschleunigen, gerades Abbremsen oder Kurvenfahrten erfolgt. Ergibt die Prüfung in Schritt S450 jedoch, dass eine Bewegungsänderung des Fahrzeugs in Δt nicht zu erwarten ist, geht das Verfahren über zu Schritt S500. Darin wird der geänderte Bildausschnitt 33 so in den anfänglichen Bildausschnitt 32 zurück überführt, dass dabei eine Änderung des Bildausschnitts durch den Nutzer 70 im Wesentlichen nicht wahrnehmbar ist. Somit wird beim Rückführen des Bildausschnitts 33 in den Ausgangszustand vermieden, dass dabei eine Diskrepanz zwischen optisch wahrgenommenen Informationen und gefühlten Beschleunigungen entsteht.

### Bezugszeichenliste

- 10: Kraftfahrzeug
- 11: erster Sensoren
- 12: zweiter Sensor
- 13: dritter Sensor
- 14: Umgebungssignal20 Kommunikationsmodul
- 21: Speicher
- 22: Transponder
- 24: Kommunikationssignal
- 30: Anzeigesystem
- 31: Bildschirm
- 32: anfänglicher Bildausschnitt
- 33: angepasster Bildausschnitt
- 40: Steuereinheit
- 41: Speicher
- 42: CPU
- 51: vierter Sensoren
- 52: fünfter Sensor
- 53: sechster Sensor
- 54: Fahrzeugsignal
- 61: Satellit
- 62: Sendeempfänger einer Zugangskontrollvorrichtung
- 70: Nutzer

## Patentansprüche

1. Verfahren zum graphischen Darstellen von Inhalten in einem Kraftfahrzeug (10) mit einem zum Erfassen von Umgebungsdaten eingerichteten ersten Sensor (11, 12, 13), einem zum Erfassen von Fahrzeugdaten eingerichteten zweiten Sensor (51, 52, 53), einem Kommunikationsmodul (20) und einem zum Darstellen von graphischen Inhalten eingerichteten Anzeigesystem (30) mit einem Bildschirm (31), das Verfahren aufweisend:
• Darstellen (S100) eines anfänglichen Bildausschnitts (32) eines Bildsignals mit zumindest einer Bilddatei auf dem Bildschirm (31), wobei der anfängliche Bildausschnitt (32) zwischen 70% und 95% der Fläche der zumindest einen Bilddatei des Bildsignals ausmacht;
• Prognose (S200) einer Änderung eines Bewegungszustands des Kraftfahrzeugs (10) anhand zumindest eines von dem zumindest einen ersten Sensor (11, 12, 13), von dem zumindest einen zweiten Sensor (51, 52, 53) und/oder von dem Kommunikationsmodul (20) empfangenen Signals;
• Prognose (S300) einer Änderung einer Relativposition zwischen einem Nutzer (70) und dem anfänglichen Bildausschnitt (32) anhand der prognostizierten Änderung des Bewegungszustands des Kraftfahrzeugs (10); und
• Darstellen (S400) eines angepassten Bildausschnitts (33) in Abhängigkeit der prognostizierten Änderung der Relativposition zwischen Nutzer (70) und anfänglichem Bildausschnitt (32), wobei die Anpassung die Position, die Ausrichtung und/oder die Größe des angepassten Bildausschnitts (33) innerhalb der zumindest einen Bilddatei des Bildsignals betrifft.

2. Verfahren nach Anspruch 1, wobei durch Anpassen des Bildausschnitts (32, 33) eine wahrgenommene Relativposition zwischen Nutzer und Bildausschnitt (32, 33) erhalten bleibt.

3. Verfahren nach Anspruch 2, wobei die vom Nutzer (70) wahrgenommene Relativposition durch eine scheinbare Größe des Bildausschnitts (32, 33) und/oder die Blickrichtung zu einem Fixpunkt der Bildebene des Bildausschnitts (32, 33) bestimmt ist.

4. Verfahren nach einem der vorangehenden Ansprüche, aufweisend ein Anpassen der Größe des Bildausschnitts (32, 33) zum Erhalt einer vom Nutzer (70) wahrgenommenen scheinbaren Größe des Bildausschnitts (32, 33).

5. Verfahren nach einem der vorangehenden Ansprüche, aufweisend ein Anpassen der Lage des Bildausschnitts (32, 33) oder eine Rotation der Bildebene zum Erhalt der Blickrichtung des Nutzers zu einem Fixpunkt der Bildausschnitts (32, 33).

6. Verfahren nach Anspruch 5, wobei die Rotation der Bildebene des Bildausschnitts (32, 33) eine perspektivische Verzerrung des Bildausschnitts (32, 33) einschließt.

7. Verfahren nach einem der vorangehenden Ansprüche, ferner aufweisend Wiederherstellen (S500) des anfänglichen Bildausschnitts (32), sofern für eine vorbestimmte Zeitspanne keine Änderung des Bewegungszustands des Kraftfahrzeugs (10) prognostiziert wird.

8. Verfahren nach einem der vorangehenden Ansprüche, wobei die Relativposition von Nutzer (70) und anfänglichem Bildausschnitt (32) als Relativposition des Kopfes, bevorzugt der Augen, des Nutzers (70) und anfänglichem Bildausschnitt (32) prognostiziert wird und/oder wobei eine anfängliche Relativposition von Nutzer (70) und Bildschirm (31) detektiert wird.

9. Verfahren nach einem der vorangehenden Ansprüche, wobei der Bildausschnitt (32, 33) eine kontextabhängige *region of interest,* ROI, des Bildsignals aufweist.

10. Kraftfahrzeug (10), aufweisend:
- einen zum Erfassen von Umgebungsdaten eingerichteten ersten Sensor (11, 12, 13), einen zum Erfassen von Fahrzeugdaten eingerichteten zweiten Sensor (51, 52, 53) und ein Kommunikationsmodul (20);
- ein zum Darstellen von graphischen Inhalten eingerichtetes Anzeigesystem (30) mit einem Bildschirm (31); und
- eine Steuereinheit (40), die dafür eingerichtet ist:
• mittels des Anzeigesystems (30) einen anfänglichen Bildausschnitt (32) eines Bildsignals mit zumindest einer Bilddatei auf dem Bildschirm (31) darzustellen (S100), wobei der anfängliche Bildausschnitt (32) zwischen 70% und 95% der Fläche der zumindest einen Bilddatei des Bildsignals ausmacht;
• ein die Umgebung des Kraftfahrzeugs (10) betreffendes Umgebungssignal (14) von dem ersten Sensor (11, 12, 13), ein das Kraftfahrzeug betreffendes Fahrzeugsignal (54) von dem zweiten Sensor (51, 52, 53) und/oder ein das Kraftfahrzeug (10) oder dessen Umgebung betreffendes Kommunikationssignal (24) von dem Kommunikationsmodul (20) zu empfangen (S150);
• basierend auf dem Umgebungssignal (14), dem Fahrzeugsignal (54) und/oder dem Kommunikationssignal (24) eine Änderung eines Bewegungszustands des Kraftfahrzeugs (10) zu prognostizieren (S200);
• basierend auf der prognostizierten Änderung des Bewegungszustands des Kraftfahrzeugs (10) eine Änderung der Relativposition zwischen einem Nutzer (70) und dem anfänglichen Bildausschnitt (32) zu prognostizieren (S300); und
• basierend auf der prognostizierten Änderung der Relativposition zwischen Nutzer (70) und anfänglichem Bildausschnitt (32) einen angepassten Bildausschnitt (33) auf dem Bildschirm (31) anzuzeigen (S400), wobei die Anpassung die Position, die Ausrichtung und/oder die Größe des angepassten Bildausschnitts (33) innerhalb der zumindest einen Bilddatei des Bildsignals betrifft.

## Claims

1. Method for graphically displaying contents in a motor vehicle (10) having a first sensor (11, 12, 13) configured to capture environmental data, a second sensor (51, 52, 53) configured to capture vehicle data, a communication module (20) and a display system (30) which is configured to display graphical contents and has a screen (31), the method comprising:
• displaying (S100) an initial image section (32) of an image signal with at least one image file on the screen (31), wherein the initial image section (32) makes up between 70% and 95% of the area of the at least one image file of the image signal;
• predicting (S200) a change in a movement state of the motor vehicle (10) on the basis of at least one signal received from the at least one first sensor (11, 12, 13), from the at least one second sensor (51, 52, 53) and/or from the communication module (20);
• predicting (S300) a change in a relative position between a user (70) and the initial image section (32) on the basis of the predicted change in the movement state of the motor vehicle (10); and
• displaying (S400) an adapted image section (33) on the basis of the predicted change in the relative position between the user (70) and the initial image section (32), wherein the adaptation relates to the position, the orientation and/or the size of the adapted image section (33) within the at least one image file of the image signal.

2. Method according to Claim 1, wherein a perceived relative position between the user and the image section (32, 33) is retained by adapting the image section (32, 33) .

3. Method according to Claim 2, wherein the relative position perceived by the user (70) is determined by an apparent size of the image section (32, 33) and/or the viewing direction with respect to a fixed point of the image plane of the image section (32, 33).

4. Method according to one of the preceding claims, comprising adapting the size of the image section (32, 33) in order to obtain an apparent size of the image section (32, 33) that is perceived by the user (70).

5. Method according to one of the preceding claims, comprising adapting the location of the image section (32, 33) or rotating the image plane in order to obtain the viewing direction of the user with respect to a fixed point of the image section (32, 33).

6. Method according to Claim 5, wherein the rotation of the image plane of the image section (32, 33) includes a perspective distortion of the image section (32, 33).

7. Method according to one of the preceding claims, also comprising restoring (S500) the initial image section (32) if no change in the movement state of the motor vehicle (10) is predicted for a predetermined period of time.

8. Method according to one of the preceding claims, wherein the relative position of the user (70) and the initial image section (32) is predicted as a relative position of the head, preferably the eyes, of the user (70) and the initial image section (32), and/or wherein an initial relative position of the user (70) and the screen (31) is detected.

9. Method according to one of the preceding claims, wherein the image section (32, 33) has a contextdependent region of interest, ROI, of the image signal.

10. Motor vehicle (10) having:
- a first sensor (11, 12, 13) configured to capture environmental data, a second sensor (51, 52, 53) configured to capture vehicle data and a communication module (20);
- a display system (30) which is configured to display graphical contents and has a screen (31); and
- a control unit (40) which is configured:
• to display (S100) an initial image section (32) of an image signal with at least one image file on the screen (31) by means of the display system (30), wherein the initial image section (32) makes up between 70% and 95% of the area of the at least one image file of the image signal;
• to receive (S150) an environmental signal (14) relating to the environment of the motor vehicle (10) from the first sensor (11, 12, 13), a vehicle signal (54) relating to the motor vehicle from the second sensor (51, 52, 53) and/or a communication signal (24) relating to the motor vehicle (10) or its environment from the communication module (20);
• to predict (S200) a change in a movement state of a motor vehicle (10) on the basis of the environmental signal (14), the vehicle signal (54) and/or the communication signal (24);
• to predict (S300) a change in the relative position between a user (70) and the initial image section (32) on the basis of the predicted change in the movement state of the motor vehicle (10); and
• to display (S400) an adapted image section (33) on the screen (31) on the basis of the predicted change in the relative position between the user (70) and the initial image section (32), wherein the adaptation relates to the position, the orientation and/or the size of the adapted image section (33) within the at least one image file of the image signal.

## Revendications

1. Procédé de représentation graphique de contenu dans un véhicule automobile (10), comprenant un premier capteur (11, 12, 13) conçu pour détecter des données environnementales, un deuxième capteur (51, 52, 53) conçu pour détecter des données de véhicule, un module de communication (20) et un système d'affichage (30) conçu pour représenter du contenu graphique et pourvu d'un écran (31), le procédé présentant les étapes consistant à :
• représenter (S100) un cadrage initial (32) d'un signal d'image avec au moins un fichier d'image à l'écran (31), dans lequel le cadrage initial (32) occupe entre 70 % et 95 % de la superficie dudit au moins un fichier d'image du signal d'image ;
• prédire (S200) un changement d'un état de mouvement du véhicule automobile (10) à l'aide d'au moins un signal reçu dudit au moins un premier capteur (11, 12, 13), dudit au moins un deuxième capteur (51, 52, 53) et/ou du module de communication (20) ;
• prédire (S300) un changement d'une position relative entre un utilisateur (70) et le cadrage initial (32) à l'aide du changement prédit de l'état de mouvement du véhicule automobile (10) ; et
• représenter (S400) un cadrage d'image adapté (33) en fonction du changement prédit de la position relative entre l'utilisateur (70) et le cadrage initial (32), dans lequel l'adaptation concerne la position, l'orientation et/ou la taille du cadrage d'image adapté (33) à l'intérieur dudit au moins un fichier d'image du signal d'image.

2. Procédé selon la revendication 1, dans lequel l'adaptation du cadrage d'image (32, 33) permet de préserver une position relative perçue entre l'utilisateur et le cadrage d'image (32, 33).

3. Procédé selon la revendication 2, dans lequel la position relative perçue par l'utilisateur (70) est déterminée par une taille apparente du cadrage d'image (32, 33) et/ou la direction du regard vers un point fixe du plan d'image du cadrage d'image (32, 33).

4. Procédé selon l'une quelconque des revendications précédentes, présentant une adaptation de la taille du cadrage d'image (32, 33) afin d'obtenir une taille apparente du cadrage d'image (32, 33), perçue par l'utilisateur (70).

5. Procédé selon l'une quelconque des revendications précédentes, présentant une adaptation de la position du cadrage d'image (32, 33) ou une rotation du plan d'image pour obtenir la direction du regard de l'utilisateur vers un point fixe du cadrage d'image (32, 33).

6. Procédé selon la revendication 5, dans lequel la rotation du plan d'image du cadrage d'image (32, 33) comprend une distorsion en perspective du cadrage d'image (32, 33).

7. Procédé selon l'une quelconque des revendications précédentes, présentant en outre le rétablissement (S500) du cadrage initial (32) dans la mesure où aucun changement de l'état de mouvement du véhicule automobile (10) n'a été prédit pendant un laps de temps prédéterminé.

8. Procédé selon l'une quelconque des revendications précédentes, dans lequel la position relative de l'utilisateur (70) et du cadrage initial (32) est prédite comme une position relative de la tête, de préférence des yeux, de l'utilisateur (70), et du cadrage initial, et/ou dans lequel une position relative initiale est détectée par l'utilisateur (70) et l'écran (31).

9. Procédé selon l'une quelconque des revendications précédentes, dans lequel la partie d'image (32, 33) présente une région d'intérêt, ROI, dépendant du contexte, du signal d'image.

10. Véhicule automobile (10), présentant :
- un premier capteur (11, 12, 13) conçu pour détecter des données environnementales, un deuxième capteur (51, 52, 53) conçu pour détecter des données de véhicule et un module de communication (20) ;
- un système d'affichage (30) pourvu d'un écran (31), conçu pour représenter du contenu graphique ; et
- une unité de commande (40) qui est conçue pour :
• représenter (S100) à l'écran (31) au moyen du système d'affichage (30) un cadrage initial (32) d'un signal d'image avec au moins un fichier d'image, dans lequel le cadrage initial (32) occupe entre 70 % et 95 % de la superficie dudit au moins fichier d'image du signal d'image ;
• recevoir (S150) du premier capteur (11, 12, 13) un signal environnemental (14) concernant l'environnement du véhicule automobile (10), recevoir du deuxième capteur (51, 52, 53) un signal de véhicule (54) concernant le véhicule automobile, et/ou recevoir du module de communication (20) un signal de communication (24) concernant le véhicule automobile (10) ou son environnement ;
• prédire (S200) un changement d'un état de mouvement du véhicule automobile (10) sur la base du signal environnemental (14), du signal de véhicule (54) et/ou du signal de communication (24) ;
• prédire (S300) sur la base du changement prédit de l'état de mouvement du véhicule automobile (10) un changement de la position relative entre un utilisateur (70) et le cadrage initial (32) ; et
• afficher (S400) à l'écran (31) un cadrage d'image (33) adapté, sur la base du changement prédit de la position relative entre l'utilisateur (70) et le cadrage initial (32), dans lequel l'adaptation concerne la position, l'orientation et/ou la taille du cadrage d'image adapté (33) à l'intérieur dudit au moins un fichier d'image du signal d'image.
